# EUROPEAN PATENT SPECIFICATION

(11) **EP 0 635 347 B1**
(45) Date of publication and mention of the grant of the patent: **17.10.2001**
(21) Application number: 94810413.8
(22) Date of filing: 12.07.1994
(51) Int. Cl.: B29C 33/00, B29D 11/00

(54) **Lens mold**
Giessform für Linsen
Moule pour les lentilles

(30) Priority: 21.07.1993 US 89523
(43) Date of publication of application: 25.01.1995
(73) Proprietor: Novartis AG, 4056 Basel (CH); Novartis-Erfindungen Verwaltungsgesellschaft m.b.H., 1235 Wien (AT)
(72) Inventor: Su, Kai C., Alpharetta, GA 30201 (US); White, Jack C., Alpharetta, GA 30202 (US); Siddiqui, Mushir, Lawrenceville, GA 30245 (US)

(56) References cited:
- EP-A- 0 087 179
- WO-A-93/04848
- DE-A- 3 444 532
- FR-A- 1 362 588
- PATENT ABSTRACTS OF JAPAN vol. 8, no. 139 (E-253) (1576) 28 June 1984 & JP-A-59 050 534 (HITACHI SEISAKUSHO) 23 March 1984

## Description

The present invention relates generally to the inspection of contact lenses, and more particularly, to a lens mold for use primarily in the manufacture of soft contact lenses.

Conventionally, a soft contact lens may be cast using a two-sided mold in which one side of the mold includes a convex surface and the other side of the mold includes an opposing concave surface, and in which a cavity for forming the lens is defined by the opposing convex and concave surfaces: A lens is formed by placing a lens material on one of the convex and concave surfaces, bringing the two sides of the mold together to form the lens cavity and separating the two sides of the mold to expose the cast lens after polymerization of the lens material.

Furthermore, techniques are generally known for controlling the adhesion of the cast lens upon separation of the two sides of the mold, i.e. for causing the cast lens to exhibit an affinity to adhere to one of the convex and concave surfaces upon separation of the two sides of the mold. The utilization of such techniques helps eliminate the time consuming, manual labor that is otherwise required in determining which surface the transparent cast lens has adhered to after separation of the two sides of the mold. For example, European Patent Application No.0367513 discloses a technique for ensuring that the cast lens remains in contact with one side of the mold by flame polishing the convex surface of the one side of the mold.

Furthermore, United States Patent No.4,197,266 discloses that by fabricating the two sides of the mold with materials which, while both wettable, have different degrees of wettability, one can insure that the cast lens will adhere to the desired surface of the mold upon separation. Additionally, United States Patent No.4,150,073 discloses that the adhesion of the cast lens may be controlled by exposing a mold surface to monomeric vapors.

However, in manufacturing the contact lens, lens material of a sufficient quantity to exceed the volume of the cavity is placed on one of the mold surfaces, and then the two sides to the mold are brought together to form the lens cavity. The WO 93/04848 describes that quantity of excess lens material is collected within the mold body, along the outer periphery of the lens cavity, to form a ring of excess polymerized lens material and, upon separation of the lens mold, this ring of excess lens material is located at one of the mold sides.

Furthermore, after the lens has been cast and the mold separated, testing of certain physical characteristics of the cast lens must be carried out. Conventionally, the individual cast lens is manually removed from the mold, and placed on a test tray. Light is then transmitted through the cast lens and directed onto a screen where certain deformities in the cast lens may be visually detected.

In general, the manufacture of contact lens is conventionally labor intensive, requiring manual handling and visual inspection of the cast lens during several stages of production, and further requiring manual removal of the ring of excess lens material.

A general of the present invention is to provide a contact lens mold in which optical inspection of the lens may be carried out while the lens remains disposed on a mold surface to the contact lens mold.

A more specific object of the present invention is to reduce the manual labor expended in the manufacture of contact lenses.

A more specific object of the present invention is to provide a two-sided contact lens mold in which the ring of excess lens material surrounding the periphery of the mold cavity is engaged with a desired side of the two-sided mold upon separation of the two-sided mold.

The above object of the present invention is realized by forming one side of the mold of a relatively transparent plastic material and by providing an optical finish on a bottom surface thereof. Optical inspection of a lens may be carried out by transmitting light through the one side of the mold and the lens disposed on the other side of the mold.

The above and other objects of the present invention are further realized by forming one side of the mold of a relatively opaque plastic material and by providing an optical finish on an inner surface thereof. Optical inspection of a lens may be carried out by reflecting light off the inner surface and through the lens disposed on the inner surface.

The aspects and features of the present invention will become more apparent from the following description taken in conjunction with the drawings in which:
FIG. 1 is a sectional view of a two-sided lens mold according to one embodiment of the present invention;
FIGs. 2a and 2b are sectional views for explaining the mechanical engagement of excess lens material to the two-sided lens mold of the present invention;
FIGs. 3-8 are sectional views of a two-sided lens mold according to other embodiments of the present invention;
FIGs. 9 and 10 are sectional views for explaining the utility of a contact lens mold according to another embodiment of the present invention.

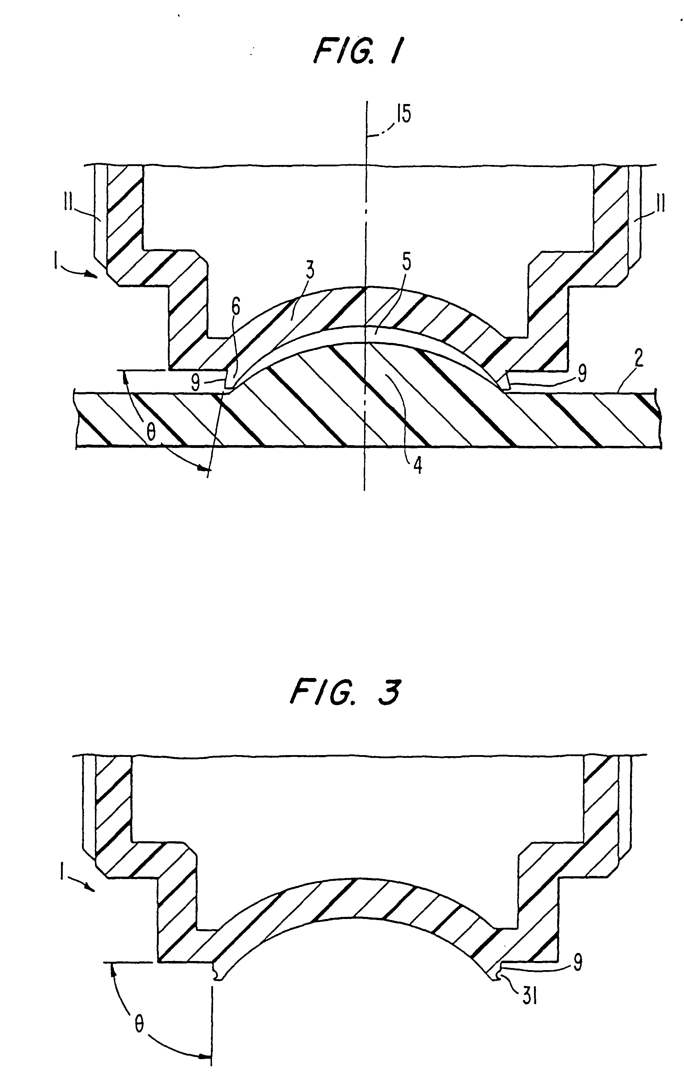

As shown in FIG.1, the two-sided lens mold of the present invention includes a first mold member1 having a concave surface portion3, and a second mold member2 having a convex surface portion4. A cavity5 for forming the lens is provided when the outer rim6 of the concave surface portion3 is made to contact the convex surface portion4 as shown. Such contact is achieved by engagement (such as by friction fitting members11 or by mechanical clamping) of the first and second mold members1, 2. The surfaces of the lens are thus formed in conformity with the respective surfaces of the convex and concave surface portions3, 4. The curvature of the lens, and thus the curvature of the convex and concave surface portions3, 4, are specified in advance to comply with optical requirements. The first and second mold members1, 2 may be formed by known techniques, such as by injection molding.

Furthermore, the first and second mold members1, 2 may optionally be formed of different plastic materials having different degrees of wettability. That is, for example, the first mold member1 may be made from relatively polar plastic materials, and the second mold member2 may be made from relatively non-polar plastic materials. Alternately, the first mold member1 may be made from relatively non-polar plastic materials, and the second mold member2 may be made from relatively polar plastic materials.

Examples of relatively polar plastic materials include polymethylmethacrylate, polyvinylchloride, polycarbonate, polyamide, polyurethane, polyester, polysulfone, polystyrene, polyphenyleneoxide, etc., or copolymers, or blends of like materials.

Examples of relatively non-polar plastic materials include polypropylene, polyethylene, poly[methylpentene], etc. or copolymers, or blends of like materials.

Accordingly, as those skilled in the art will appreciate, by the proper selection of the lens material and the polar and non-polar plastic materials of the first and second mold members1, 2, the lens may be directed to adhere to the desired surface (concave or convex) of the two-sided mold upon separation of the first and second mold members1, 2.

Accordingly, as those skilled in the art will further appreciate, the relative polarity of the plastic mold materials selected will depend on the polarity of the lens material itself. Moreover, the degree of polarity of each plastic mold material is dependent upon the amount or number of polar groups that may occur in the polymer backbone or side chains. Therefore, two different mold materials having different relative polarities may be selected from the "relatively polar materials" listed above for respectively forming the mold members1, 2, to achieve the same desired effect. Similarly, two different mold materials may instead be selected from the "relatively non-polar materials" listed above.

According to one embodiment of the present invention, the first mold member1 is provided with an annular surface9 extending upwardly and inwardly (i.e. q is less than 90°) towards a longitudinal axis15 from the outer rim6 of the concave surface portion3. That is, if the annular surface9 tapers inwardly at a constant angle as shown, the annular surface9 is frusto-conical.

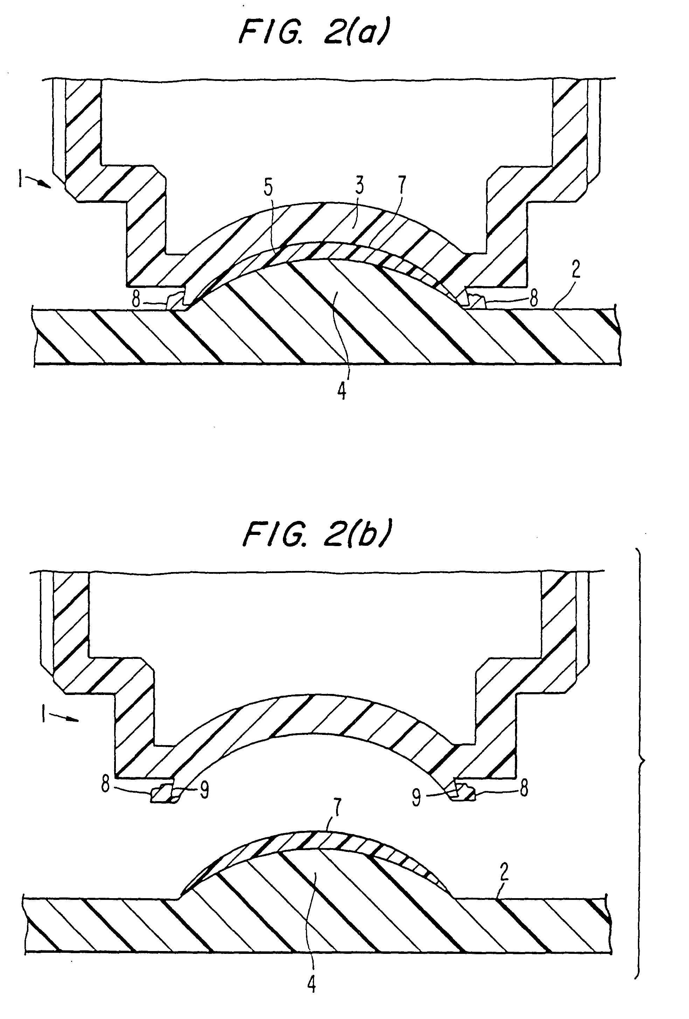

The engagement of excess lens material according to the present invention will now be described with reference to FIGs.2a and2b.

During the manufacture of the contact lens, lens material of a sufficient quantity to exceed the volume defined by the cavity5 is placed on the concave surface portion3 or the convex surface portion4. The first mold member1 is moved relative the second mold member2 to form the cavity5. The quantity of lens material in excess of the volume defined by the cavity5 is collected along the - outer periphery of the cavity5 in the form of a ring8.

Suppose, as described above, that the lens material and the plastic materials of the first and second members1, 2 shown in FIG.2a are selected such that the lens7 is directed to adhere to the convex surface portion4 of the second mold member2.

Upon polymerization of the lens material, the first and second mold members1, 2 are separated to expose the cast lens7 as shown in FIG.2b. The cast lens7 adheres to the convex surface portion4 due to the selection of the lens material and the relatively non-polar and polar plastic materials of the first and second mold members 1, 2. For the same reasons that the lens7 tends to adhere to the second mold member2, the ring8 of excess lens material will also tend to adhere to the second mold member2.

However, the ring8 of excess lens material is mechanically engaged with the first mold member1 due to the inwardly extending annular surface9. It is noted that the angle q of the inwardly extending annular surface9 may extend only very slightly inwardly to operate as intended.

Accordingly, upon separation of the first and second mold members1, 2, the first mold member1 having the ring8 of excess lens material engaged therewith may be discarded, and the second mold member2 having the cast lens7 adhered to the convex surface portion4 may be conveyed to further processing steps without individual handling of the cast lens itself and without inspection and removal of the ring8 of excess lens material.

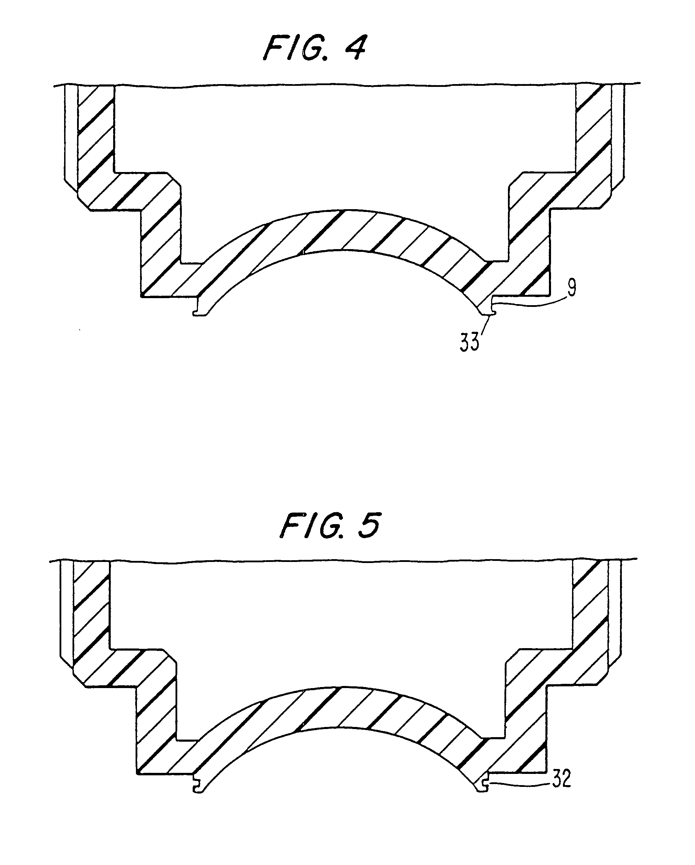

Other embodiments of the ring engaging mechanism of the present invention will now be described with reference to FIGs.3-7.

As shown in FIG.3, the annular surface9 may be provided such that q equals or nearly equals 90°. In the annular surface9 is formed a round under cut31. As the excess lens material polymerizes along the annular surface9, such excess lens material will form within the round under cut31 and will thus be mechanically engaged with the mold member1, As shown in FIG.5, a rectangular notch32 may be provided in place of or in addition to the round under cut31 shown in FIG.3.

As shown in FIG.4, the annular surface9 is provided with an outwardly extending lip member33 for engaging the ring of excess lens material. The lip member33 may be formed at the lower edge of the annular surface9 as shown, or the lip member33 may be formed elsewhere along the annular surface9.

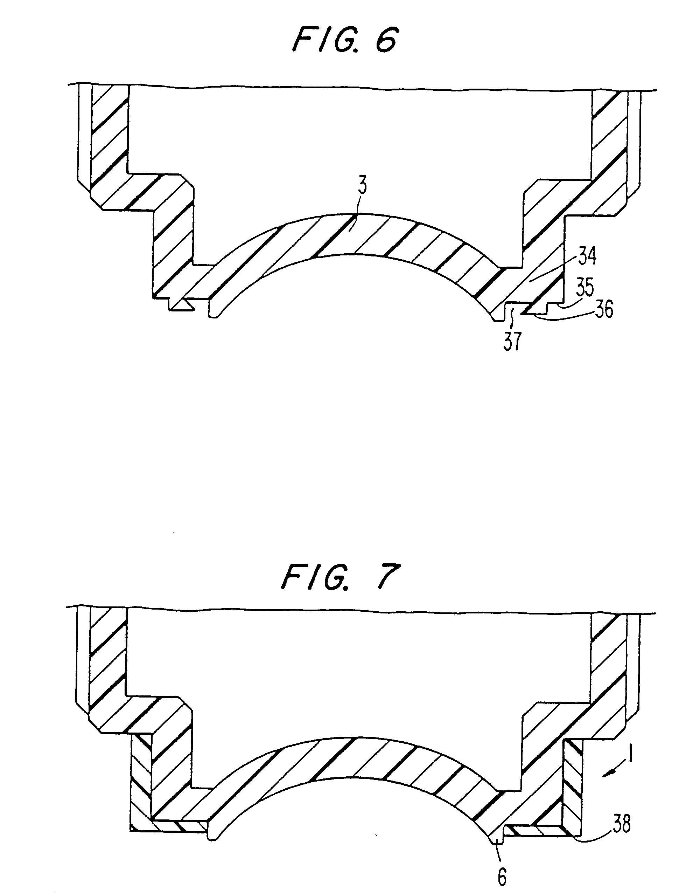

As shown in FIG.6, the concave portion3 is further defined by an outwardly extending annular member34 having a lower surface35. The lower surface35 has formed thereon a ring engaging member36. The ring engaging member36 includes a portion extending inwardly and downwardly from the lower surface35 to form an annular void37 as shown. The excess lens material flows into the annular void37 and, upon polymerization, is thereby mechanically engaged with the mold member1.

As shown in FIG.7, a non-mechanical locking arrangement is provided for engaging the excess lens material. Suppose again that the first mold member1 is made of a relatively non-polar material and the second mold member (not shown) is made of a relatively polar material, thereby causing a cast lens to adhere to the relatively polar material of the second member. According to one embodiment of the present invention, a sleeve38 is provided along the periphery of the outer rim6 of the first mold member1. By forming the sleeve of a relatively more polar material with respect to the relatively polar material of the second mold member, the ring of excess lens material will exhibit an affinity to adhere to the relatively more polar material of the sleeve38.

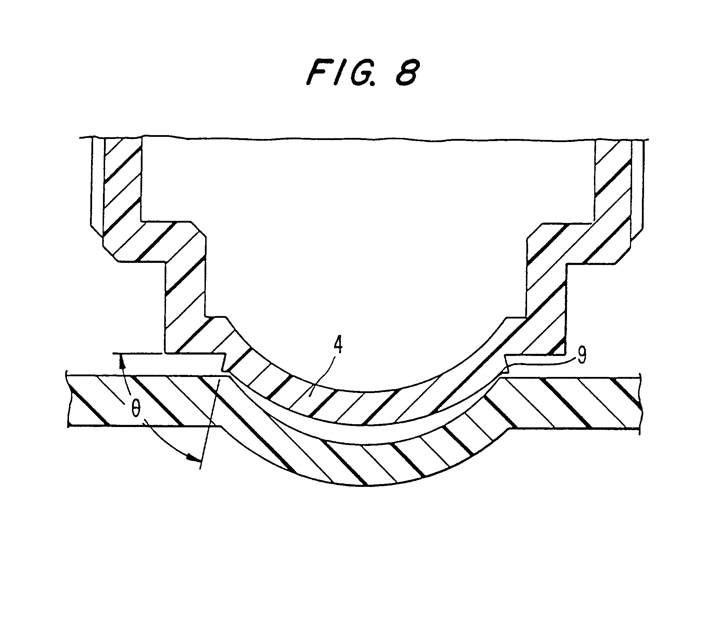

Although several embodiments of the ring engaging mechanism of the present invention have been herein described with reference to FIGS.1-7, it is understood that those skilled in the art may contemplate other specific configurations without departing from the scope and spirit of the present invention. Moreover, although the embodiments discussed above illustrate the engagement of the ring of excess lens material to the concave portion of the mold, the ring of excess lens material may instead be directed to engage the convex side of the mold. For example, as shown in FIG.8, the convex portion4 may include the inwardly extending annular surface9 of the embodiment shown in Fig.1 for engaging the ring of excess lens material. Similarly, the other embodiments of the present invention may be applied to the convex portion of the mold.

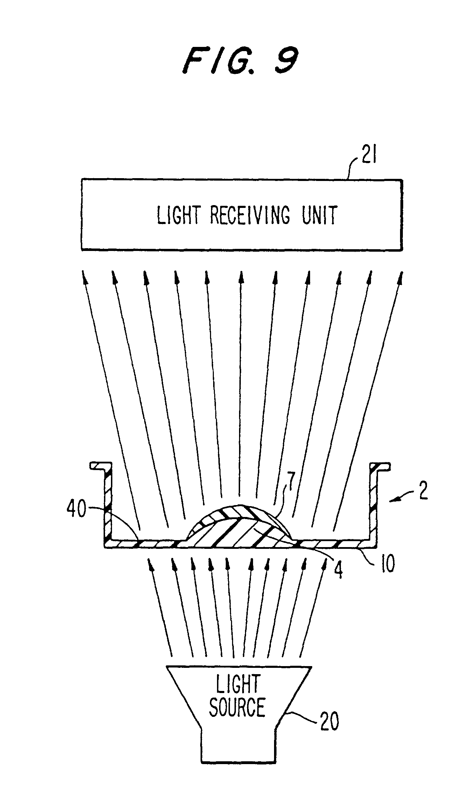

Still another feature of the present invention will be described with reference to FIG.9. Suppose, as discussed above with reference to FIGs2a and 2b, that the cast lens7 has adhered to the convex portion4 of the second mold member2. According to the embodiment shown in FIG.9, optical inspection of the cast lens7 may be carried out without removing the cast lens7 from the convex surface portion4.

As shown in FIG.9, the second mold member2 is formed of a relatively transparent plastic and a bottom surface 10 thereof is provided with an optical finish. The thus formed second mold member2 is placed between a light source20 and a light receiving unit21, whereby light is transmitted from the light source20 (either directly or by reflection), through the second mold member2, through the cast lens7, and to the light receiving unit21. The light receiving unit21 may be a projection screen, in which case deformities in the cast lens7 and debris in the second mold member2 may be detected by visual inspection of the pattern cast on the projection screen. It is also contemplated that the light receiving unit21 may be a CCD image sensor apparatus in which deformities in the cast lens7 and debris in the second mold member2 are detected automatically.

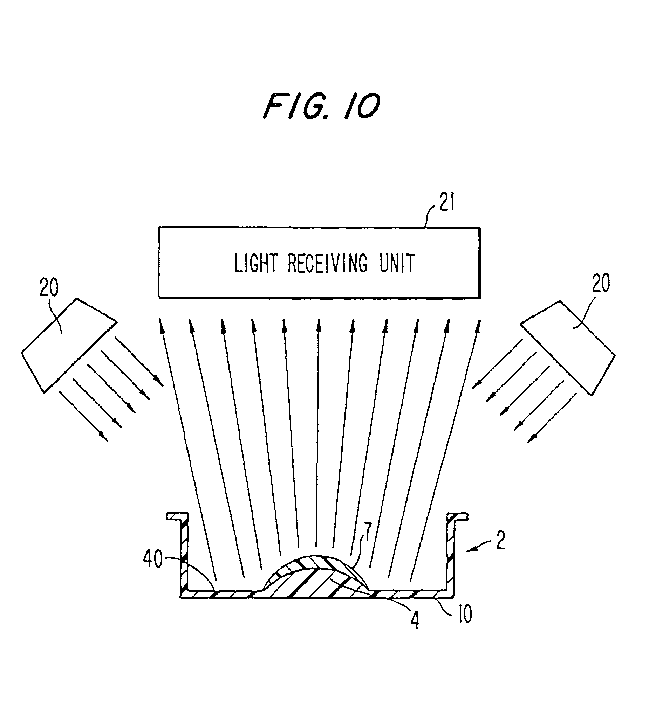

An alternative arrangement may be provided as shown in FIG.10, in which the second mold member2 is formed of a relatively opaque plastic and an upper surface40 thereof, including the convex surface, is provided with a reflective optical finish. The thus formed second mold member2 is placed in relation to the light source 20 and the light receiving unit21 such that light is reflected off of the upper surface40 and through the cast lens7 to the light receiving unit21. Deformities in the cast lens7 and debris in the second mold member2 can thus be detected in the same manner as discussed above with respect to FIG.9.

As is known to those skilled in the art, the tooling members for forming the lens mold are provided with an optical finish, by polishing for example, only at surface portions thereof which conform to the lens defining surfaces of the lens mold. In the same manner, the optical finishes discussed above with respect to FIGs.9 and10 may be obtained.

Furthermore, a spin cast method of manufacturing contact lenses is known in the art whereby only one mold member is utilized. Briefly, in such a method, a single mold member is provided with a quantity of lens material on a concave surface thereof and is then rotated, whereby centrifugal forces act on the lens material to form a contact lens. The aspects and advantages of the present invention as discussed above with respect to FIGs.9 and10 are equally applicable to such a mold member used in the spin cast technique.

According to the lens mold of the present invention, a lens may be cast and optically inspected without manual handling of the lens itself. Furthermore, especially when the cast lens is made to adhere to one side of a two-sided mold, the ring of excess lens material may be directed to adhere to the other side of the two-sided mold.

The present invention is not limited to applications involving a two-sided lens mold made of materials having different degrees of wettability. That is, the ring engaging mechanisms and the optically finished surfaces of the present invention may be utilized and the advantages realized even in the case where is no control of the adherence of the cast lens.

Still furthermore, although the discussion above is directed primarily to soft contact lenses, the present invention is not seen to be so limited, and may be directed to the manufacture of any other polymeric lenses.

## Claims

1. A lens mold comprising:
a first mold member (1) comprising a concave portion (3), said concave portion (3) having a concave surface centered at a longitudinal axis of said first mold member (1), an outer rim (6) located along a periphery of said concave surface (3), and ring engaging means disposed adjacent said outer rim (6) for engaging, upon polymerization of a lens material within a lens cavity (5), excess lens material formed along an outer periphery of the lens cavity (5); and
a second mold member (2) comprising a convex portion (4) having a convex surface, wherein the lens cavity (5) is defined between said concave and convex surfaces (3,4) when said outer rim (6) of said concave portion (3) of said first mold member (1) is made to contact said convex portion (4) of said second mold member (2);
and upon polymerization of the lens material and upon a separation of said first and second mold members (1,2), the excess lens material is engaged with said first mold member (1),
wherein said second mold member (2) is formed of a relatively transparent plastic material and comprises an outer surface opposite said convex surface (4), said outer surface having an optical finish to permit optical inspection of a lens (7) located on said convex surface (4) by transmitting light through said outer surface, said second mold member (2), said convex surface (4) and the lens (7), or wherein said second mold member (2) is formed of a relatively opaque plastic material, and wherein said convex surface (4) is provided with an optical finish to permit optical inspection of a lens (7) located on said convex surface (4) by reflecting light off of said convex surface (4) and through the lens (7).

2. A lens mold according to claim 1, wherein said ring engaging means of said concave portion comprises an annular surface (9) extending inwardly towards the longitudinal axis of said first mold member (1) from said outer rim (6).

3. A lens mold according to claim 2, wherein said annular surface (9) is frusto-conical.

4. A lens mold according to claim 1, wherein said ring engaging means of said concave portion (3) comprises an annular surface (9) extending substantially parallel to the longitudinal axis of the first mold member (1), and a notch (31, 32) formed in and along said annular surface (9).

5. A lens mold according to claim 4, wherein said notch (31) defines a void within said annular surface (9) having a rounded cross-section for receiving a portion of the excess lens material.

6. A lens mold according to claim 4, wherein said notch (32) defines a void within said annular surface (9) having a rectangular cross-section for receiving a portion of the excess lens material.

7. A lens mold according to claim 1, wherein said ring engaging means of said concave portion (3) comprises an annular surface (9) extending substantially parallel to the longitudinal axis of said first mold member (1), and a lip member (32) extending outwardly from said annular surface (9).

8. A lens mold according to claim 1, wherein said ring engaging means of said concave portion (3) comprises a first annular surface extending (34) outwardly along the periphery of the lens cavity (5) from the outer rim (6), and an annular member (9) extending from said first annular surface (34), said annular member (9) defining a second annular surface extending inwardly towards the longitudinal axis of said first mold member (1) from said first annular surface (34), wherein an annular void for receiving the excess lens material is defined by said outer rim (6), said first annular surface (34) and said second annular surface (9).

9. A lens mold according to claim 1, wherein said ring engaging means of said concave portion (3) comprises an annular member (9) made of a first plastic material disposed along a periphery of said outer rim (6), and wherein said second mold member (2) is made of a second plastic material, and wherein said first plastic material is more polar relative to said second plastic material, whereby the excess lens material will exhibit an affinity to adhere to said annular member (9) upon the separation of said first and second mold members (1,2).

10. A lens mold according to claim 9, wherein said first mold member (1) at said concave surface (3) is made of a third plastic material, and wherein said second plastic material is more polar relative to said third plastic material, whereby a polymerized lens within the lens cavity (5) will exhibit an affinity to adhere to said convex surface (4) upon the separation of said first and second mold members (1, 2).

11. A lens mold according to any one of claims1-8, wherein said first mold member (1) is made of a relatively non-polar plastic material, and said second mold member (2) is made of a relatively polar plastic material, whereby a polymerized lens within the lens cavity (5) will exhibit an affinity to adhere to said convex surface (4) upon the separation of said first and second mold members (1,2).

12. A lens mold comprising:
a first mold member (1) comprising a convex portion (4), said convex portion (4) having a convex surface (4) centered at a longitudinal axis of said first mold member (1), an outer rim (6) located along a periphery of said convex surface (4), and ring engaging means disposed adjacent said outer rim (6) for engaging, upon polymerization of a lens material within a lens cavity (5), excess lens material formed along an outer periphery of the lens cavity (5); and
a second mold member (2) comprising a concave portion (3) having a concave surface (3), wherein the lens cavity (5) is defined between said convex and
concave surfaces (3,4) when said outer rim (6) of said convex portion (4) of said first mold member (1) is made to contact said concave portion (3) of said second mold member (2); and
upon polymerization of the lens material and upon a separation of said first and second mold members (1,2), the excess lens material is engaged with said first mold member (1),
wherein said second mold member (2) is formed of a relatively transparent plastic material and comprises an outer surface opposite said concave surface (3), said outer surface having an optical finish to permit optical inspection of a lens (7) located on said concave surface (3) by transmitting light through said outer surface, said second mold member (2), said concave surface (3) and the lens (7), or wherein said second mold member (2) is formed of a relatively opaque plastic material, and wherein said concave surface (3) is provided with an optical finish to permit optical inspection of a lens (7) located on said concave surface (3) by reflecting light off of said concave (3) surface and through the lens (7).

13. A lens mold according to claim 12, wherein said ring engaging means of said convex portion (4) comprises an annular surface (9) extending inwardly towards the longitudinal axis of said first mold member (1) from said outer rim (6).

14. A lens mold according to claim 13, wherein said annular surface (9) is frustoconical.

15. A lens mold according to claim 12, wherein said ring engaging means of said convex portion (4) comprises an annular surface (9) extending substantially parallel to the longitudinal axis of the first mold member (1), and a notch (31, 32) formed in and along said annular surface (9).

16. A lens mold according to claim 15, wherein said notch (31) defines a void within said annular surface (9) having a rounded cross-section for receiving a portion of the excess lens material.

17. A lens mold according to claim 15, wherein said notch (32) defines a void within said annular surface (9) having a rectangular cross-section for receiving a portion of the excess lens material.

18. A lens mold according to claim 12, wherein said ring engaging means of said convex portion (4) comprises an annular surface (9) extending substantially parallel to the longitudinal axis of said first mold member (1), and a lip member (33) extending outwardly from said annular surface (9).

19. A lens mold according to claim 12, wherein said ring engaging means of said convex portion (4) comprises a first annular surface (34) extending outwardly along the periphery of the lens cavity (5) from the outer rim (6), and an annular member (9) extending from said first annular surface (34), said annular member (9) defining a second annular surface extending inwardly towards the longitudinal axis of said first mold member (1) from said first annular surface (34), wherein an annular void for receiving the excess lens material is defined by said outer rim (6), first annular surface (34) and said second annular surface (9).

20. A lens mold according to claim 12, wherein said ring engaging means of said convex portion (4) comprises an annular member (9) made of a first plastic material disposed along a periphery of said outer rim (6), and wherein said second mold member (2) is made of a second plastic material, and wherein said first plastic material is more polar relative to said second plastic material, whereby the excess lens material will exhibit an affinity to adhere to said annular member (9) upon the separation of said first and second mold members (1,2).

21. A lens mold according to claim 20, wherein said first mold member (1) at said convex surface (4) is made of a third plastic material, and wherein said second plastic material is more polar relative to said third plastic material, whereby a polymerized lens (7) within the lens cavity (5) will exhibit an affinity to adhere to said concave surface (3) upon the separation of said first and second mold members (1,2).

22. A lens mold according to claim 12, wherein said first mold member (1) is made of a relatively non-polar plastic material, and said second mold member (2) is made of a relatively polar plastic material, whereby a polymerized lens (7) within the lens cavity (5) will exhibit an affinity to adhere to said concave surface (3) upon the separation of said first and second mold members (1,2).

23. A lens mold according to claim 1, comprising a mold member formed of a relatively transparent plastic material and having an outer surface opposite a convex surface (4), said outer surface having an optical finish to permit optical inspection of a lens (7) located on said convex surface (4) by transmitting light through said outer surface, said mold member, said convex surface and the lens (7).

24. A lens mold according to claim 1, comprising a mold member formed of a relatively opaque plastic material and having a convex surface portion (4) defining a convex surface (4), said convex surface (4) having an optical finish to permit optical inspection of a lens (7) located on said convex surface (4) by reflecting light off said convex surface portion (4).

25. A lens mold according to claim 1, comprising a mold member formed of a relatively transparent plastic material and having an outer surface opposite a concave surface (3), said outer surface having an optical finish to permit optical inspection of a lens (7) located on said concave surface (3) by transmitting light through said outer surface, said mold member, said concave surface (3) and the lens (7).

26. A lens mold according to claim 1, comprising a mold member formed of a relatively opaque plastic material and having a concave surface portion defining a concave surface (3), said concave surface portion (3) having an optical finish to permit optical inspection of a lens (7) located on said concave surface (3) by reflecting light off of said concave surface portion (3).

## Patentansprüche

1. Linsenform, umfassend:
ein erstes Formelement (1), umfassend einen konkaven Teil (3), wobei der konkave Teil (3) eine konkave Oberfläche mittig an der Längsachse des ersten Formelements (1) aufweist, einen äußeren Einfassungsrand (6), angeordnet längs der Peripherie der konkaven Oberfläche (3), und ein ringförmiges eingreifendes Mittel, angeordnet benachbart zu dem äußeren Einfassungsrand (6), zum Eingreifen von überschüssigem Linsenmaterial, das sich längs der äußeren Peripherie des Linsenhohlraums (5) nach der Polymerisation eines Linsenmaterials in einem Linsenhohlraum (5) gebildet hat, und ein zweites Formelement (2), umfassend einen konvexen Teil (4) mit einer konvexen Oberfläche, wobei der Linsenhohlraum (5) zwischen der konkaven und der konvexen Oberfläche (3, 4) definiert ist, wenn der äußere Einfassungsrand (6) des konkaven Teils (3) des ersten Formelements (1) mit dem konvexen Teil (4) des zweiten Formelements (2) in Kontakt gebracht wird;
und nach Polymerisation des Linsenmaterials und nach Trennung des ersten und des zweiten Formelements (1, 2), das überschüssige Linsenmaterial mit dem ersten Formelement (1) in Eingriff ist,
wobei das zweite Formelement (2) aus einem relativ durchsichtigen Kunststoffmaterial gebildet ist und eine Außenfläche gegenüber der konvexen Oberfläche (4) umfasst, wobei die Außenfläche eine optische Veredelung aufweist, um optisch eine Begutachtung einer Linse (7), die auf der konvexen Oberfläche (4) angeordnet ist, durch Lichtdurchtritt durch die Außenfläche, das zweite Formelement (2), die konvexe Oberfläche (4) und die Linse (7) zu gestatten, oder wobei das zweite Formelement (2) aus einem relativ undurchsichtigen Kunststoffmaterial gebildet ist und wobei die konvexe Oberfläche (4) mit einer optischen Veredelung versehen ist, um optische Begutachtung einer Linse (7), angeordnet auf der konvexen Oberfläche (4) durch wegreflektierendes Licht der konvexen Oberfläche (4) und durch die Linse (7) zu erlauben.

2. Linsenform nach Anspruch 1, wobei das ringförmige eingreifende Mittel des konkaven Teils eine ringförmige Oberfläche (9) umfasst, die sich einwärts zu der Längsachse des ersten Formelements (1) von dem äußeren Einfassungsrand (6) erstreckt.

3. Linsenform nach Anspruch 2, wobei die ringförmige Oberfläche (9) kegelstumpfförmig ist.

4. Linsenform nach Anspruch 1, wobei das ringförmige eingreifende Mittel des konkaven Teils (3) eine ringförmige Oberfläche (9), die sich im Wesentlichen parallel zur Längsachse des ersten Formelements (1) erstreckt und eine Kerbe (31, 32), die in und längs der ringförmigen Oberfläche (9) gebildet ist, umfasst.

5. Linsenform nach Anspruch 4, wobei die Kerbe (31) in der ringförmigen Oberfläche (9) zur Aufnahme eines Teils des überschüssigen Linsenmaterials einen Hohlraum mit rundem Querschnitt definiert.

6. Linsenform nach Anspruch 4, wobei die Kerbe (32) in der ringförmigen Oberfläche (9) zur Aufnahme eines Teils des überschüssigen Linsenmaterials einen Hohlraum mit rechtekkigem Querschnitt definiert.

7. Linsenform nach Anspruch 1, wobei das ringförmige eingreifende Mittel des konkaven Teils (3) eine ringförmige Oberfläche (9), die sich im Wesentlichen parallel zur Längsachse des ersten Formelements (1) erstreckt und ein Lippenelement (32), das sich auswärts von der ringförmigen Oberfläche (9) erstreckt, umfasst.

8. Linsenform nach Anspruch 1, wobei das ringförmige eingreifende Mittel des konkaven Teils (3) eine erste ringförmige Oberfläche (34), die sich auswärts längs der Peripherie des Linsenhohlraums (5) vom äußeren Einfassungsrand (6) erstreckt, und ein ringförmiges Element (9), das sich von der ersten ringförmigen Oberfläche (34) erstreckt, umfasst, wobei das ringförmige Element (9) eine zweite ringförmige Oberfläche definiert, die sich einwärts zu der Längsachse des ersten Formelements (1) von der ersten kreisförmigen Oberfläche (34) erstreckt, wobei ein ringförmiger Hohlraum zur Aufnahme des überschüssigen Linsenmaterials durch den äußeren Einfassungsrand (6), die erste ringförmige Oberfläche (34) und die zweite ringförmige Oberfläche (9) definiert wird.

9. Linsenform nach Anspruch 1, wobei das ringförmige eingreifende Mittel des konkaven Teils (3) ein ringförmiges Element (9) aus einem ersten Kunststoffmaterial, angeordnet längs einer Peripherie des äußeren Einfassungsrandes (6), umfasst, und wobei das zweite Formelement (2) aus einem zweiten Kunststoffmaterial besteht und wobei das erste Kunststoffmaterial in bezug auf das zweite Kunststoffmaterial polarer ist, wodurch das überschüssige Linsenmaterial eine Affinität zum Anhaften an das ringförmige Element (9) nach Trennung des ersten und des zweiten Formelements (1, 2) zeigt.

10. Linsenform nach Anspruch 9, wobei das erste Formelement (1) an der konkaven Oberfläche (3) aus einem dritten Kunststoffmaterial besteht und wobei das zweite Kunststoffmaterial in bezug auf das dritte Kunststoffmaterial polarer ist, wodurch eine in dem Linsenhohlraum (5) polymerisierte Linse eine Affinität zum Anhaften an der konvexen Oberfläche (4) nach Trennung des ersten und des zweiten Formelements (1, 2) zeigt.

11. Linsenform nach einem der Ansprüche 1-8, wobei das erste Formelement (1) aus einem relativ unpolaren Kunststoffmaterial besteht und das zweite Formelement (2) aus einem relativ polaren Kunststoffmaterial besteht, wodurch eine in dem Linsenhohlraum (5) polymerisierte Linse eine Affinität zum Anhaften an der konvexen Oberfläche (4) nach der Trennung des ersten und des zweiten Formelements (1, 2) zeigt.

12. Linsenform, umfassend:
ein erstes Formelement (1), umfassend einen konvexen Teil (4), wobei der konvexe Teil (4) eine konvexe Oberfläche (4) mittig an einer Längsachse des ersten Formelements (1) aufweist, einen äußeren Einfassungsrand (6), angeordnet längs einer Peripherie der konvexen Oberfläche (4), und ein ringförmiges eingreifendes Mittel, angeordnet benachbart zu dem äußeren Einfassungsrand (6), zum Eingreifen von überschüssigem Linsenmaterial, das sich längs einer äußeren Peripherie des Linsenhohlraums (5) nach Polymerisation eines Linsenmaterials in einem Linsenhohlraum (5) gebildet hat; und
ein zweites Formelement (2), umfassend einen konkaven Teil (3) mit einer konkaven Oberfläche (3), wobei der Linsenhohlraum (5) zwischen der konvexen und der konkaven Oberfläche (3, 4) gebildet wird, wenn der äußere Einfassungsrand (6) des konvexen Teils (4) des ersten Formelements (1) mit dem konkaven Teil (3) des zweiten Formelements (2) in Kontakt gebracht wird; und
nach Polymerisation des Linsenmaterials und nach Trennung des ersten und des zweiten Formelements (1, 2) das überschüssige Linsenmaterial mit dem ersten Formelement (1) in Eingriff ist,
wobei das zweite Formelement (2) aus einem relativ durchsichtigen Kunststoffmaterial gebildet ist und eine Außenfläche gegenüber der konkaven Oberfläche (3) umfasst, wobei die Außenfläche eine optische Veredelung aufweist, um optisch eine Begutachtung einer Linse (7), die auf der konkaven Oberfläche (3) angeordnet ist, durch Lichtdurchtritt durch die Außenfläche, das zweite Formelement (2), die konkave Oberfläche (3) und die Linse (7) zu gestatten, oder wobei das zweite Formelement (2) aus einem relativ undurchsichtigen Kunststoffmaterial gebildet ist und wobei die konkave Oberfläche (3) mit einer optischen Veredelung versehen ist, um optische Begutachtung einer Linse (7), angeordnet auf der konkaven Oberfläche (3) durch wegreflektierendes Licht der konkaven Oberfläche (3) und durch die Linse (7) zu erlauben.

13. Linsenform nach Anspruch 12, wobei das ringförmige eingreifende Mittel des konvexen Teils (4) eine ringförmige Oberfläche (9) umfasst, die sich einwärts zu der Längsachse des ersten Formelements (1) von dem äußeren Einfassungsrand (6) erstreckt.

14. Linsenform nach Anspruch 13, wobei die ringförmige Oberfläche (9) kegelstumpfförmig ist.

15. Linsenform nach Anspruch 12, wobei das ringförmige eingreifende Mittel des konvexen Teils (4) eine ringförmige Oberfläche (9), die sich im Wesentlichen parallel zur Längsachse des ersten Formelements (1) erstreckt und eine Kerbe (31, 32), die in und längs der ringförmigen Oberfläche (9) gebildet ist, umfasst.

16. Linsenform nach Anspruch 15, wobei die Kerbe (31) in der ringförmigen Oberfläche (9) zur Aufnahme eines Teils des überschüssigen Linsenmaterials einen Hohlraum mit rundem Querschnitt definiert.

17. Linsenform nach Anspruch 15, wobei die Kerbe (32) in der ringförmigen Oberfläche (9) zur Aufnahme eines Teils des überschüssigen Linsenmaterials einen Hohlraum mit rechteckigem Querschnitt definiert.

18. Linsenform nach Anspruch 12, wobei das ringförmige eingreifende Mittel des konvexen Teils (4) eine ringförmige Oberfläche (9), die sich im Wesentlichen parallel zur Längsachse des ersten Formelements (1) erstreckt und ein Lippenelement (33), das sich auswärts von der ringförmigen Oberfläche (9) erstreckt, umfasst.

19. Linsenform nach Anspruch 12, wobei das ringförmige eingreifende Mittel des konvexen Teils (4) eine erste ringförmige Oberfläche (34), die sich auswärts längs der Peripherie des Linsenhohlraums (5) vom äußeren Einfassungsrand (6) erstreckt, und ein ringförmiges Element (9), das sich von der ersten ringförmigen Oberfläche (34) erstreckt, umfasst, wobei das ringförmige Element (9) eine zweite ringförmige Oberfläche definiert, die sich einwärts zu der Längsachse des ersten Formelements (1) von der ersten kreisförmigen Oberfläche (34) erstreckt, wobei ein ringförmiger Hohlraum zur Aufnahme des überschüssigen Linsenmaterials durch den äußeren Einfassungsrand (6), die erste ringförmige Oberfläche (34) und die zweite ringförmige Oberfläche (9) definiert wird.

20. Linsenform nach Anspruch 12, wobei das ringförmige eingreifende Mittel des konvexen Teils (4) ein ringförmiges Element (9) aus einem ersten Kunststoffmaterial, angeordnet längs einer Peripherie des äußeren Einfassungsrandes (6), umfasst, und wobei das zweite Formelement (2) aus einem zweiten Kunststoffmaterial besteht und wobei das erste Kunststoffmaterial in bezug auf das zweite Kunststoffmaterial polarer ist, wodurch das überschüssige Linsenmaterial eine Affinität zum Anhaften an das ringförmige Element (9) nach Trennung des ersten und des zweiten Formelements (1, 2) zeigt.

21. Linsenform nach Anspruch 20, wobei das erste Formelement (1) an der konvexen Oberfläche (4) aus einem dritten Kunststoffmaterial besteht und wobei das zweite Kunststoffmaterial in bezug auf das dritte Kunststoffmaterial polarer ist, wodurch eine in dem Linsenhohlraum (5) polymerisierte Linse (7) eine Affinität zum Anhaften an der konkaven Oberfläche (3) nach Trennung des ersten und des zweiten Formelements (1, 2) zeigt.

22. Linsenform nach Anspruch 12, wobei das erste Formelement (1) aus einem relativ unpolaren Kunststoffmaterial besteht und das zweite Formelement (2) aus einem relativ polaren Kunststoffmaterial besteht, wodurch eine in dem Linsenhohlraum (5) polymerisierte Linse (7) eine Affinität zum Anhaften an der konkaven Oberfläche (3) nach Trennung des ersten und des zweiten Formelements (1, 2) zeigt.

23. Linsenform nach Anspruch 1, umfassend ein Formelement aus einem relativ durchsichtigen Kunststoffmaterial und mit einer äußeren Oberfläche gegenüber einer konvexen Oberfläche (4), wobei die äußere Oberfläche eine optische Veredelung aufweist zur optischen Begutachtung einer Linse (7), angeordnet auf der konvexen Oberfläche (4), durch Lichtdurchtritt durch die äußere Oberfläche, das Formelement, die konvexe Oberfläche und die Linse (7).

24. Linsenform nach Anspruch 1, umfassend ein Formelement aus einem relativ undurchsichtigen Kunststoffmaterial und mit einem konvexen Oberflächenteil (4), der eine konvexe Oberfläche (4) definiert, wobei die konvexe Oberfläche (4) eine optische Veredelung aufweist, um optische Begutachtung einer Linse (7), angeordnet auf der konvexen Oberfläche (4), durch wegreflektierendes Licht von dem konvexen Oberflächenteil (4) zu gestatten.

25. Linsenform nach Anspruch 1, umfassend ein Formelement, hergestellt aus einem relativ durchsichtigen Kunststoffmaterial und mit einer äußeren Oberfläche gegenüber einer konkaven Oberfläche (3), wobei die äußere Oberfläche eine optische Veredelung aufweist, um optische Begutachtung einer Linse (7), angeordnet auf der konkaven Oberfläche (3), durch Lichtdurchtritt durch die äußere Oberfläche, das Formelement, die konkave Oberfläche (3) und die Linse (7) zu gestatten.

26. Linsenform nach Anspruch 1, umfassend ein Formelement aus einem relativ undurchsichtigen Kunststoffmaterial und mit einem konkaven Oberflächenteil, der eine konkave Oberfläche (3) bildet, wobei der konkave Oberflächenteil (3) eine optische Veredelung aufweist, um eine optische Begutachtung einer Linse (7), angeordnet auf der konkaven Oberfläche (3), durch wegreflektierendes Licht von dem konkaven Oberflächenteil (3) zu gestatten.

## Revendications

1. Un moule pour lentilles comprenant:
un premier élément du moule (1) comprenant une portion concave (3), ladite portion concave (3) ayant une surface concave centrée sur un axe longitudinal dudit premier élément du moule (1), un bord extérieur (6) situé le long d'une périphérie de ladite surface concave (3), et un moyen d'engagement annulaire disposé de manière adjacente audit bord extérieur (6) pour l'engagement, après polymérisation d'une matière pour lentilles à l'intérieur d'une cavité pour lentilles (5), de l'excès de matière pour lentilles formé le long de la périphérie extérieure de la cavité pour lentilles (5); et
un second élément du moule (2) comprenant une portion convexe (4) ayant une surface convexe, où la cavité pour lentilles (5) est définie entre lesdites surfaces concave et convexe (3,4) lorsque ledit bord extérieur (6) de ladite portion concave (3) dudit premier élément du moule (1) est mis en contact avec ladite portion convexe (4) dudit second élément du moule (2);
et, après polymérisation de la matière pour lentilles et séparation desdits premier et second éléments du moule (1,2), l'excès de matière pour lentilles est engagé avec ledit premier élément du moule (1),
où ledit second élément du moule (2) est formé d'une matière plastique relativement transparente et comprend une surface extérieure opposée à ladite surface convexe (4), ladite surface extérieure ayant un fini optique pour permettre l'inspection optique d'une lentille (7) située sur ladite surface convexe (4) par transmission de lumière à travers ladite surface extérieure, ledit second élément du moule (2), ladite surface convexe (4) et la lentille (7) ou bien où ledit second élément du moule (2) est formé d'une matière plastique relativement opaque, et où ladite surface convexe (4) est munie d'un fini optique pour permettre l'inspection optique d'une lentille (7) située sur ladite surface convexe (4) par réflexion de lumière de ladite surface convexe (4) et à travers la lentille (7).

2. Un moule pour lentilles selon la revendication 1, où ledit moyen d'engagement annulaire de ladite portion concave comprend une surface annulaire (9) s'étendant vers l'intérieur vers l'axe longitudinal dudit premier élément du moule (1) à partir dudit bord extérieur (6).

3. Un moule pour lentilles selon la revendication 2, où ladite surface annulaire (9) est un cône tronqué.

4. Un moule pour lentilles selon la revendication 1, où ledit moyen d'engagement annulaire de ladite portion concave (3) comprend une surface annulaire (9) s'étendant substantiellement de manière parallèle à l'axe longitudinal du premier élément du moule (1) et une encoche (31,32) formée dans et le long de ladite surface annulaire (9).

5. Un moule pour lentilles selon la revendication 4, où ladite encoche (31) définit un espace à l'intérieur de ladite surface annulaire (9) ayant une section transversale arrondie pour recevoir une portion de l'excès de matière pour lentilles.

6. Un moule pour lentilles selon la revendication 4, où ladite encoche (32) définit un espace à l'intérieur de ladite surface annulaire (9) ayant une section transversale rectangulaire pour recevoir une portion de l'excès de matière pour lentilles.

7. Un moule pour lentilles selon la revendication 1, où ledit moyen d'engagement annulaire de ladite portion concave (3) comprend une surface annulaire (9) s'étendant substantiellement de manière parallèle à l'axe longitudinal dudit premier élément du moule (1) et un rebord (32) s'étendant vers l'extérieur à partir de ladite surface annulaire (9).

8. Un moule pour lentilles selon la revendication 1, où ledit moyen d'engagement annulaire de ladite portion concave (3) comprend une première surface annulaire (34) s'étendant vers l'extérieur le long de la périphérie de la cavité pour lentilles (5) à partir du bord extérieur (6), et un élément annulaire (9) s'étendant de ladite première surface annulaire (34), ledit élément annulaire (9) définissant une seconde surface annulaire s'étendant vers l'intérieur vers l'axe longitudinal dudit premier élément du moule (1) à partir de ladite première surface annulaire (34), où un espace annulaire pour recevoir l'excès de matière pour lentilles est défini par ledit bord extérieur (6), ladite première surface annulaire (34) et ladite seconde surface annulaire (9).

9. Un moule pour lentilles selon la revendication 1, où ledit moyen d'engagement annulaire de ladite portion concave (3) comprend un élément annulaire (9) fait d'une première matière plastique disposée le long d'une périphérie dudit bord extérieur (6), et où ledit second élément du moule (2) est fait d'une seconde matière plastique, et où ladite première matière plastique est plus polaire par rapport à ladite seconde matière plastique, l'excès de matière pour lentilles aura une affinité pour adhérer audit élément annulaire (9) après séparation desdits premier et second éléments du moule (1,2).

10. Un moule pour lentilles selon la revendication 9, où ledit premier élément du moule (1) sur ladite surface concave (3) est fait d'une troisième matière plastique, et où ladite seconde matière plastique est plus polaire par rapport à ladite troisième matière plastique, une lentille polymérisée à l'intérieur de la cavité pour lentilles (5) aura une affinité pour adhérer à ladite surface convexe (4) après séparation desdits premier et second éléments du moule (1,2).

11. Un moule pour lentilles selon l'une quelconque des revendications 1-8, où ledit premier élément du moule (1) est fait d'une matière plastique relativement non polaire, et ledit second élément du moule (2) est fait d'une matière plastique relativement polaire, une lentille polymérisée à l'intérieur de la cavité pour lentilles (5) aura une affinité pour adhérer à ladite surface convexe (4) après séparation desdits premier et second éléments du moule (1,2).

12. Un moule pour lentilles comprenant:
un premier élément du moule (1) comprenant une portion convexe (4), ladite portion convexe (4) ayant une surface convexe (4) centrée sur un axe longitudinal dudit premier élément du moule (1), un bord extérieur (6) situé le long d'une périphérie de ladite surface convexe (4), et un moyen d'engagement annulaire disposé de manière adjacente audit bord extérieur (6) pour l'engagement, après polymérisation, d'une matière pour lentilles à l'intérieur d'une cavité pour lentilles (5), de l'excès de matière pour lentilles formé le long d'une périphérie extérieure de la cavité pour lentilles (5); et
Un second élément du moule (2) comprenant une portion concave (3) ayant une surface concave (3), où la cavité pour lentilles (5) est définie entre lesdites surfaces convexe et concave (3,4) lorsque ledit bord extérieur (6) de ladite portion convexe (4) dudit premier élément du moule (1) est fait pour être en contact avec ladite portion concave (3) dudit second élément du moule (2); et
après polymérisation de la matière pour lentilles et séparation desdits premier et second éléments du moule (1,2), l'excès de matière pour lentilles est engagé avec ledit premier élément du moule (1),
où ledit second élément du moule (2) est formé d'une matière plastique relativement transparente et comprend une surface extérieure opposée à ladite surface concave (3), ladite surface extérieure ayant un fini optique pour permettre l'inspection optique d'une lentille (7) située sur ladite surface concave (3) en transmettant la lumière à travers ladite surface extérieure, ledit second élément du moule (2), ladite surface concave (3) et la lentille (7), ou bien où ledit second élément du moule (2) est formé d'une matière plastique relativement opaque, et où ladite surface concave (3) est munie d'un fini optique pour permettre l'inspection optique d'une lentille (7) située sur ladite surface concave (3) par réflexion de lumière de ladite surface concave (3) et à travers la lentille (7).

13. Un moule pour lentilles selon la revendication 12, où ledit moyen d'engagement annulaire de ladite portion convexe (4) comprend une surface annulaire (9) s'étendant vers l'intérieur vers l'axe longitudinal dudit premier élément du moule (1) à partir dudit bord extérieur (6).

14. Un moule pour lentilles selon la revendication 13, où ladite surface annulaire (9) est un cône tronqué.

15. Un moule pour lentilles selon la revendication 12, où ledit moyen d'engagement annulaire de ladite portion convexe (4) comprend une surface annulaire (9) s'étendant substantiellement de manière parallèle à l'axe longitudinal du premier élément du moule (1) et une encoche (31, 32) formée dans et le long de ladite surface annulaire (9).

16. Un moule pour lentilles selon la revendication 15, où ladite encoche (31) définit un espace à l'intérieur de ladite surface annulaire (9) ayant une section transversale arrondie pour recevoir une portion de l'excès de matière pour lentilles.

17. Un moule pour lentilles selon la revendication 15, où ladite encoche (32) définit un espace à l'intérieur de ladite surface annulaire (9) ayant une section transversale rectangulaire pour recevoir une portion de l'excès de matière pour lentilles.

18. Un moule pour lentilles selon la revendication 12, où ledit moyen d'engagement annulaire de ladite portion convexe (4) comprend une surface annulaire (9) s'étendant substantiellement de manière parallèle à l'axe longitudinal du premier élément du moule (1) et un rebord (33) s'étendant vers l'extérieur à partir de ladite surface annulaire (9).

19. Un moule pour lentilles selon la revendication 12, où ledit moyen d'engagement annulaire de ladite portion convexe (4) comprend une première surface annulaire (34) s'étendant vers l'extérieur le long de la périphérie de la cavité pour lentilles (5) à partir du bord extérieur (6), et un élément annulaire (9) s'étendant à partir de ladite première surface annulaire (34), ledit élément annulaire (9) définissant une seconde surface annulaire s'étendant vers l'intérieur vers l'axe longitudinal dudit premier élément du moule (1) à partir de ladite première surface annulaire (34), où un espace annulaire pour recevoir l'excès de matière pour lentilles est défini par ledit bord extérieur (6), ladite première surface annulaire (34) et ladite seconde surface annulaire (9).

20. Un moule pour lentilles selon la revendication 12, où ledit moyen d'engagement annulaire de ladite portion convexe (4) comprend un élément annulaire (9) fait d'une première matière plastique disposée le long d'une périphérie dudit bord extérieur (6), et où ledit second élément du moule (2) est fait d'une seconde matière plastique, et où ladite première matière plastique est plus polaire par rapport à ladite seconde matière plastique, l'excès de matière pour lentilles aura une affinité pour adhérer audit élément annulaire (9) après séparation desdits premier et second éléments du moule (1,2).

21. Un moule pour lentilles selon la revendication 20, où ledit premier élément du moule (1) sur ladite surface convexe (4) est fait d'une troisième matière plastique, et où ladite seconde matière plastique est plus polaire par rapport à ladite troisième matière plastique, une lentille polymérisée (7) à l'intérieur de la cavité pour lentilles (5) aura une affinité pour adhérer à ladite surface concave (3) après séparation desdits premier et second éléments du moule (1,2).

22. Un moule pour lentilles selon la revendication 12, où ledit premier élément du moule (1) est fait d'une matière plastique relativement non polaire et ledit second élément du moule (2) est fait d'une matière plastique relativement polaire, une lentille polymérisée (7) à l'intérieur de la cavité pour lentilles (5) aura une affinité pour adhérer à ladite surface concave (3) après séparation desdits premier et second éléments du moule (1,2).

23. Un moule pour lentilles selon la revendication 1, comprenant un élément du moule formé d'une matière plastique relativement transparente et ayant une surface extérieure opposée à une surface convexe (4), ladite surface extérieure ayant un fini optique pour permettre l'inspection optique d'une lentille (7) située sur ladite surface convexe (4) par transmission de lumière à travers ladite surface extérieure, ledit élément du moule, ladite surface convexe et la lentille (7).

24. Un moule pour lentilles selon la revendication 1, comprenant un élément du moule formé d'une matière plastique relativement opaque et ayant une portion de surface convexe (4) définissant une surface convexe (4), ladite surface convexe (4) ayant un fini optique pour permettre l'inspection optique d'une lentille (7) située sur ladite surface convexe (4) par réflexion de lumière à partir de ladite portion de surface convexe (4).

25. Un moule pour lentilles selon la revendication 1, comprenant un élément du moule formé d'une matière plastique relativement transparente et ayant une surface extérieure opposée à une surface concave (3), ladite surface extérieure ayant un fini optique pour permettre l'inspection optique d'une lentille (7) située sur ladite surface concave (3) par transmission de lumière à travers ladite surface extérieure, ledit élément du moule, la dite surface concave (3) et la lentille (7).

26. Un moule pour lentilles selon la revendication 1, comprenant un élément du moule formé d'une matière plastique relativement opaque et ayant une portion de surface concave définissant une surface concave (3), ladite portion de surface concave (3) ayant un fini optique pour permettre l'inspection optique d'une lentille (7) située sur ladite surface concave (3), par réflexion de lumière à partir de ladite portion de surface concave (3).
